# EUROPEAN PATENT SPECIFICATION

(11) **EP 1 682 591 B1**
(45) Date of publication and mention of the grant of the patent: **13.08.2008**
(21) Application number: 03818953.6
(22) Date of filing: 11.11.2003
(51) Int. Cl.: C08F 220/00

(54) **COPOLYMERS COMPRISING UNSATURATION AND PROCESS FOR PREPARATION THEREOF**
UNGESÄTTIGTHEIT ENTHALTENDE COPOLYMERE UND HERSTELLUNGSVERFAHREN DAFÜR
COPOLYMERES COMPORTANT UNE INSATURATION ET LEUR PROCEDE DE PREPARATION

(43) Date of publication of application: 26.07.2006
(73) Proprietor: COUNCIL OF SCIENTIFIC AND INDUSTRIAL RESEARCH, New Delhi 110 001 (IN)
(72) Inventor: KULKARNI, Mohan, Gopalkrishna, 411 008 Maharashtra (IN); KARMALKAR, Rohini, Nitin, 411 008 Maharashtra (IN); SATAV, Sunita, Suryakant, 411 008 Maharashtra (IN)
(74) Representative: Bergentall, Annika Maria
(86) International application number: PCT/IB2003/005070
(87) International publication number: WO 2005/044879

(56) References cited:
- EP-A- 0 490 269
- WO-A-02/094329
- US-A1- 2004 157 989
- [Online] 2000, , XP002292663 Handbook of Chemistry and Physics Online :octanol-water partition coefficients Retrieved from the Internet: URL:www.hbcpnetbase.com> [retrieved on 2004-08-16] the whole document
- 2000, , XP002292664 Handbook of Chemistry and Physics Online :Aqueous solubility and Henry's law constants of organic compounds Retrieved from the Internet: URL:www.hbcpnetbase.com> [retrieved on 2004-08-16] the whole document
- XP002292662 Hazardous substance fact sheet : divinyl benzene Retrieved from the Internet: URL:www.state.nj.us/health/eoh/rtkweb/0820 .pdf>

## Description

### Field of the invention

The present invention relates to soluble copolymers comprising unsaturation and a process for the preparation thereof. More particularly it relates to polymers of the formula [(Ax) (By)]ₙ, wherein A is any vinyl monomer comprising one unsaturation, B is any vinyl monomer containing multiple unsaturation and x, y and n are any integral values greater than zero. In our co-pending application No. NCL-28-2002 (PCT Application No. PCT/IB03/03593) we have described the process for the preparation of inclusion complexes of cyclic macromolecular compounds with monomers containing multiple unsaturation Polymerization of such complexes with vinyl substituted monomers yields polymers that are soluble and have unsaturated sites for further modification.

### Background and prior art

Thermosetting polymers can not be converted into a molten state or dissolved in solvents. Although these materials offer enhanced mechanical and thermal properties over the thermoplastics, they cannot be readily processed into finished products using processing techniques, commonly used in the case of thermoplastics. Similarly the properties of the thermoplastics cannot be significantly enhanced after converting the resins into finished products since there is no scope to modify the polymer structure chemically after the polymerization is completed.

In certain thermosetting polymers, reactive groups are introduced in the backbone. These polymers are usually in the form of lattices that are further crosslinked either thermally or by addition of functional groups like isocyanates, amines or metal ions. These resins attain their desired properties i.e., insolubility in most organic solvents, good water resistance and hardness by network formation and are used as coatings. *(*Van E.S.J.J. in Polymeric Dispersions Principles and Applications. Asua, J. M. (Ed), Kluwer Publishers, 1997, p. 451*;* Ooka, M Ozawa.H.Progress in Organic Coatings, vol.23, 1994, p.325). The need for polymers which are water soluble and thermally fusible and which could be later converted into products having enhanced mechanical/thermal/solvent resistance properties is increasing with growing applications of polymers in different fields.

Water insoluble molecules become water-soluble on treatment with aqueous solutions of cyclodextrins or similar host molecule. The inclusion phenomenon leads to significant changes of solution properties and reactivity of the guest molecule. The formation of inclusion complexes of hydrophobic monomers with β-cyclodextrin or its derivatives has been reported. *(*Storsberg, J., Ritter, H. Macromolecular. Communications. 21, 230, 2000. Jeromin, J. Ritter, H. Macromolecular. Communications. 19, 377, 1998. Jeromin, J. Noll, O. Ritter, H. Macromolecular. Chemistry & Physics, 199, 2641-1998., Glockner, P. Ritter, H. Macromolecular Rapid. Communications, 20, 602, 1999). It has been established that the reactivity ratios of complexed monomers differ significantly from those of the uncomplexed monomers.

Complexes of cyclodextrin have been investigated in the past. US Patent No. 4,906,488 describes these for the release of permeants to the outside hosts. Similarly US Patent 5,258,414 describes encapsulation of blowing agents into cyclodextrins and incorporation of the complexes into thermoplastics for delayed release of the blowing agents. US Patent 5,268,286 describes the method for polymerization of biocatalysts on polymers. Similarly US Patent 5,290,831 describes the use of cyclodextrins for stabilization of the polymerization initiators as to regulate the polymerization in a desirable manner.

US Patent 6,180,739 describes polymerizable cyclodextrin derivatives for applications in dental resins, which adhere strongly to dentin The said patent covers polymerizable cyclodextrin derivatives wherein cyclodextrin is reacted with a large excess of monomer so that each cyclodextrin molecule is covalently linked to a large number of polymerizable groups. The compositions are useful in dental and industrial formulations. Another feature of this invention is the presence of functional groups in the polymer structure which can form hydrogen bonds, ionic bonds, Van der Waal interactions with the appropriate substrate so as to enhance adhesion. The invention also covers initiators, which are encapsulated in cyclodextrin structure. The cyclodextrin is an integral part of the polymer structure and has a functional role in application.

The said patent deals with functionalized polymers containing cyclodextrin wherein cyclodextrin are covalently bonded to a monomer that the polymer structure contains cyclodextrin. Thus the subject matter of the invention covered by this patent is a highly substituted or derivatized cyclodextrin containing unsaturated groups. Another feature of this invention is presence of a functionalized group in the polymer structure which can form hydrogen bonds, ionic bonds, Van der Waal interactions with appropriate substrate so as to enhance adhesion. The invention also covers photo sensitive initiators, which are encapsulated in cyclodextrin. The invention thus deals_with complexes of thermal initiators encapsulated in cyclodextrin derivatives. In many cases the functional sites such as carboxyl groups present in the polymer are bridged using calcium or other di-cationic metals so as to provide cross linking.

The subject matter of our invention deals with the encapsulation of the cross linker which can contain more than one unsaturated groups. t may be noted here that the interaction between the cross linker and cyclodextrin exploited in this work is non-covalent in nature.

As a result of that complexation, vinyl groups present in the cross linker but encapsulated in the cyclodextrin cavity do not take part in polymerization and prevent cross linking.

Also, cyclodextrin can be removed after polymer has been formed and is not a part of the resulting polymer structure after the second stage of cross linking is effected either by thermal or photo chemical polymerization. It may be further mentioned that the initiators used by us are in their free form and are not encapsulated in cyclodextrin.

In our copending application No.NCL-28-2002 (PCT Application No. PCT/IB03/03593) we have described the preparation of inclusion complexes of cyclodextrins with monomers containing multiple unsaturations. Polymerization of these complexes gives rise to soluble homopolymers containing unsaturated sites which can be further crosslinked. But applications of homopolymers of monomers having multiple unsaturations are limited. Copolymerization of different monomers gives rise to tailor made materials for a wide range of applications. Depending upon the composition of the comonomers either hydrophilic, hydrophobic or amphiphilic polymers can be synthesized. If unsaturated groups are incorporated into these copolymers, they can then be converted into films, membranes or micro or nanoparticles and can be crosslinked in a second step. Such polymers would find applications in electronics, photoresists, controlled release delivery systems, micro electro mechanical systems (MEMS) etc.

### Object of the invention

The principle object of the present invention is to provide soluble copolymers of vinyl monomers containing multiple unsaturations and a process for the preparation thereof.

Another object is to provide a new process for the preparation of crosslinked polymers in different forms like thin films, membranes, monolayers, micro or nanoparticles in the second step polymerization.

### Summary of the invention

The present invention relates to soluble copolymers comprising unsaturation and a process for the preparation thereof. More particularly it relates to polymers of the formula [(Ax) (By)]ₙ, wherein A is any vinyl monomer comprising one unsaturation, B is any vinyl monomer containing multiple unsaturation and x, y and n are any integral values greater than zero. In our co-pending application No. NCL-28-2002 (PCT Application No. PCT/IB03/03593) we have described the process for the preparation of inclusion complexes of cyclic macromolecular compounds with monomers containing multiple unsaturation Polymerization of such complexes with vinyl substituted monomers yields polymers that are soluble and have unsaturated sites for further modification.

### Detailed description of the invention

Accordingly, the present invention provides soluble copolymers having a general formula [(Ax) (By)]ₙ, wherein A is any vinyl monomer comprising one unsaturation, B is any vinyl monomer containing multiple unsaturation and x, y and n are any integral values greater than zero. The present invention also provides a process for preparation of soluble copolymers which comprises dissolving an inclusion complex of the monomer containing multiple unsaturation with a cyclic macromolecular compound in an appropriate solvent, adding at least one vinyl monomer and a free radical initiator to this solution and polymerizing by the composition by either thermally or photochemically initiated polymerization in the presence of appropriate initiators to obtain the product.

In one of the embodiments of the present invention the inclusion complexes are prepared as per the process claimed and described in our co-pending Application No. NCL-28-2002 (PCT Application No. PCT/IB03/03593).

In another embodiment the content of the inclusion complex containing multiple unsaturation may be varied from 0.01 to 99.9%.

In yet another embodiment, the solvent for preparing solution of inclusion complex may be chosen from polar aprotic solvents exemplified by N, N dimethyl formamide, N, N dimethyl acelamide, dimethyl sulfoxide and water.

In still another embodiment the vinyl monomer may be methyl methacrylate, ethyl acrylate, butyl acrylate, acrylic acid, methacrylic acid, acrylonitrile, vinyl acetate, glycidyl methacrylate, 2-hydroxyethyl methacrylate, 2-hydroxyl propyl methacrylate, 2-amino ethyl acrylate hydrochloride, butyl acrylate, cetyl acrylate, cetyl methacrylate, phenyl methacrylate, N-isopropyl acrylamide, acrylamide, N-t- butyl acrylamide, styrene and styrene sulfonic acid, allyl amine and / or its salts

In another embodiment the inclusion complex may be a monomer containing multiple unsaturation such as di, tri or tetra acrylates or methacrylates as exemplified by ethylene glycol dimethacrylate, trimethylol propane trimethacrylate, pentaerythritol trimethacrylate, pentaerythritol tetramethacrylate, bisphenol A dimethacrylate, glycerol dimethacrylate, glycerol diacrylate, vinyl methacrylate, vinyl acrylate, trimethylol propane triacrylate, pentaerythritol tetraacrylate or aromatic divinyl compounds as exemplified by divinyl benzene.

In yet another embodiment the polymerization initiator may be chosen from azo, peroxide or redox type as exemplified by azobisisobutyronitrile, benzoyl peroxide, t- butyl hydroperoxide, potassium persulfate, ammonium persulfate.

In yet another embodiment the initiator may be chosen from a family of water soluble azoinitiators as exemplified by azobis (amidinopropane) dihydrochloride

In yet embodiment the soluble copolymers prepared are crosslinked using conventional free radical polymerization methods to give insoluble polymers.

In one of the features of the present invention the polymerization is carried out by any of the conventional methods of polymerization given below.
i) Thermal polymerization in the temperature range 40°C to 80°C under inert atmosphere
ii) Polymerization by UV irradiation at temperature in the range 4°C to 40°C using photoinitiators.
iii) Polymerization by y irradiation in absence of a free radical initiator.
iv) Suspension or emulsion polymerization to obtain the polymer in spherical form.

In a feature of the present invention the copolymers prepared using the described above are soluble in organic solvents and contain unsaturated groups.

### EXAMPLES

The invention is now described below by examples, which are illustrative but do not limit the scope of the invention.

### Example 1

This example provides the preparation of β-cyclodextrin-ethylene glycol dimethacrylate complex described in our co-pending application NCL-28-2002 (PCT Application No. PCT/IB03/03593). 11.35 g (0.01 moles) (β-cyclodextrin was dissolved in 450 ml distilled water at room temperature. To this 98 g (0.01 moles) ethylene glycol dimethacrylate was added in one portion and the mixture was stirred using a magnetic stirrer for 24 hours. The complex precipitated from the solution was filtered under vacuum. The complex was washed thoroughly with distilled water to remove uncomplexed β-cyclodextrin and with methanol to remove uncomplexed ethylene glycol dimethacrylate. The complex was dried at room temperature in desiccators. The yield was 73 %. The complex was characterized by 200 MHz 'H NMR and IR The stoichiometry of the complex was determined from the area of the protons for β-cyclodextrin and ethylene glycol dimethacrylate and found to be 1:1 IR spectroscopy indicated the presence of unsaturation in the complex indicating toe formation of inclusion complex of ethylene glycol dimethacrylate and β-cyclodextrin.

### Example 2

This example provides the preparation of p (methyl methacrylate-co-ethylene glycol dimethacrylate (EGDMA)).

0.660 g (0.495 mmoles) β-cyclodextrin-ethylene glycol dimethacrylate complex, g methyl methacrylate (9.9 mmoles) was dissolved in 5 ml N, N dimethyl formamide. To this 10 mg azobisisobutyronitrile was added and the tube was purged with nitrogen and dipped in a water bath maintained at 65°C for 18-20 hours. The polymer was precipitated in water to remove P-cyclodextrin, which remains in the aqueous medium. It was dried in a desiccator at room temperature. The yield was 68 %. The polymer was characterized by 'H NMR and IR spectroscopy. Both the methods showed the presence of unsaturation. 1H NMR (CDCl₃): 3.6 δ, b, OCH₃, 5.97, 6.17 δ, 2H, =CH₂,4.00 δ, -CH₂ of EDA, 8 δ, s-CH₃, 0.85,1.03 δ-CH2-CH). IR 728 cm C=O, 1654 cm'¹ -C=C-, 2854, 2926 cm'¹ -CH₃, 1435 cm'¹ =CH₂. The molecular wt as determined by GPC was 88,000.

### Example 3

This example shows the comparison of polymerization using a preformed complex described in the process above and by a conventional technique in the presence of (3-cyclodextrin.1 g methyl methacrylate (9.9 mmoles), 0.098 g ethylene glycol dimethacrylate (0.49 mmmoles) and 0.562 g (0.49 mmoles) β-cyclodextrin were dissolved in 6 ml N, N dimethyl formamide. 10 mg azobisisobutyronitrile was added and the tube was purged with nitrogen for 10 minutes. The polymerization was carried out at 65°C for 20 hours. The polymer was obtained in the form of an insoluble gel.

### Example 4

This example provides the preparation of p(methyl methacrylate-co-vinyl methacrylate). 1g methyl methacrylate (9.9 mmoles), 0.617 g (0.495 mmoles) β-cyclodextrin-vinyl methacrylate complex were dissolved in 5 ml DMF. 10 mg azobisisobutyronitrole was added and the test tube was purged with nitrogen for 20 minutes. The polymerization was carried out 65°C for 18 hours. Polymer was obtained by precipitating in water. The polymer yield was 70 % and the molecular wt as characterized by GPC was 32,300 and polydispersity 6.5. The polymer was characterized by 'H NMR and IR spectroscopy. ¹HNMR (CDCl₃): 3.57 δ, b, -OCH3, 5.16, 6.17 8,=CH₂ of VMA,1.8 δ -CH₃, 0.82, 0.92 &-CH-CH2). IR 728 cm C=O, 1646 cm C=C, 2854, 2926 cm⁻¹ CH3, 1435 cm⁻¹ =CH2,

### Example 5

This example provides the preparation of β (vinyl acetate-co-vinyl methacrylate). 1 g (11.6 mmoles), vinyl acetate, 0.724 g (0.59 mmoles) β-cyclodexirin-vinyl methacrylate complex was dissolved in 5 ml DMF. To this 10 mg A1BN was added and the test tube was purged with nitrogen for 15 minutes. Polymerization was carried out at 65°C for 18 hours. The polymer was isolated by precipitation in water. The yield obtained was 72 % and the molecular wt was 4500. The polymer was characterized by 'HNMR and IR spectroscopy.

### Example 6

This example provides the preparation of p(vinyl acelale-co-cthylene glycol dimethacrylate (EGDMA)).

1 g (11.6mmoles) vinyl acetate, 0.773 β-cyclodextrin-ethylene glycol dimethacrylate complex were dissolved in 5 ml DMF. To this 10 mg AIBN was added and the polymerization was carried out at 65°C for 18 hours. Polymer was obtained by precipitation in water. The yield was 74%. Molecular wt of the polymer was 4335. The polymer was characterized by 'H NMR and IR spectroscopy. 'H NMR (CDCl₃) 2.05 δ, b, - CH3 of vinyl acetate, 79 fi-(CH2-CH), 4.08 δ, d, -CH2 of EDA, 5.58, 6.08 δ s, -CHj. IR (nujol) 1720 cm-¹, C=O, 1643 cm⁻¹ C=C, 606 cm 947 cm⁻¹ 1022 cm-¹,1238 cm-¹, 2856, 2924 cm⁻¹-CH₃.

### Example 7

This example provides the preparation of p(methyl methacrylaie-co-trimethylol propane trimethacrylate(TRIM)).

1g methyl methacrylate (9.9 mmoles) and 0.73 g (β-cyclodextrin-trimethylol propane trimethaciylate (TRIM) complex {1:2} was dissolved in 5 ml DMF. To this 10 mg AIBN was added and the test tube was purged with nitrogen for 10 minutes. Polymerization was carried out at 65°C for 20 h and the polymer was obtained by precipitation in water. The yield was 69%. The molecular wt. of the polymer measured by GPC was 40,200 and the polydispersity 9.2. The polymer was characterized by ¹H NMR and IR spectroscopy. 'H NMR (CDCI₃): 3.6 δ OCH₃ of methyl methacrylate, 5.9, 6.15 δ, d, =CH₂ 1.97 δ, H₃, 2.75 2.92 δ, -CH₂-O IR (nujol): 1728 cm⁻¹, C=O, 1672 cm⁻¹, 1435 cm⁻¹ =-CH₂. 2927cm⁻¹, 2950 cm⁻¹ -CH3.

### Example 8

This example provides the preparation of p(methyl methacrylate-co-ethylene glycol dimethacrylate (EGDMA)} by photopolymerization.

0.5 g methyl methacrylate (4.95 mmoles) and 0.33 g (0.25 mmoles) p-cyclodextrin-ethylene glycol dimethacrylate complex were dissolved in 2 ml dimethyl formamide. To this 5 mg 1-hydroxy cyclohexyl phenyl ketone was added and the solution exposed to UV irradiation at room temperature for 20 minutes. The polymer was obtained by precipitation in water. The yield was 60 %. The polymer was characterized by ¹H NMR and IR spectroscopy. The molecular wt of the polymer was M_{w}= 6530, Mₙ, = 2490 and polydispersity 2.6.

### Example 9

This example provides the preparation of p(methyl methacrylate-co-ethylene glycol dimethacrylate).

2 g (0.0198 moles) methyl methacrylate and 5.3 g (3.9 mmoles) β-cyclodextrin-ethylene glycol dimethacrylate were dissolved in 20 ml N, N dimethyl formamide. To this 20 mg azobisisobutyronitrile was added and the polymerization was carried out at 65°C for 20 h. The polymer was obtained by precipitation in water. The yield was 74 %. The molecular wt of the polymer as determined by GPC was M_{w}=42,000, Mₙ= 19,700, M_{w}/Mₙ = 2.1. The polymer was characterized by ¹H NMR and IR spectroscopy

### Example 10

This example provides the preparation of p(methyl methacrylate-co-EGDMA) using β-cyclodextrin-EGDMA complex

Methyl methacrylate, 0.47 g (4.67 mmoles), 0.350 g (0.23 mmoles) β-cyclodextrin-EGDMA complex was dissolved in 3 ml N, N dimethyl formamide and 5 mg azobisisobutyronitrile was added. The test tube was purged with nitrogen for 15 minutes and the polymerization was carried out at 65°C for 18 hours. The polymer was precipitated in water. It was purified by dissolving in 10 ml dichloromethane filtering and evaporating the dichloromethane. The yield of the polymer was 64 %. The polymer was characterized by *H NMR and IR spectroscopy The molecular weight of the polymer as characterized by GPC was M_{w}=29,900, Mₙ 11,340 and polydispersity 2.6.

### Example 11

This example provides the preparation of p(methyl methacrylate-vinyl pyridine ethylene glycol dimethacrylate Methyl methacrylate 1g (9.9mmoles), 0.156 g (1.98 mmoles) vinyl pyridine and 0.4 g (0.297 mmoles) (β-cyclodextrin-ethylene grycol dimethacrylate complex were dissolved in 5 ml DMF. 10 mg azobisiobutyronitrile was added and the test tube was purged with nitrogen for 15 minutes. Polymerization was carried out for 65°C for 18 h. The polymer was obtained by precipitation in water. The yield of the polymer was 78%. The polymer was characterized by 'H NMR and IR spectroscopy ¹H NMR (DMSOd₆): 3.6 δ, -OCH3, 0.9-1.9 δ -(CH-CH₂)-, 7.22, 8.49 δ pyridine protons, 4.03 δ, 5.5 δ, =CH2. The polymer was insoluble in THF but dissolved in a mixture of tetrahydrofuran/isopropanol 50: 50 v/v. The polymer had an equilibrium swelling of 71 % in buffer of pH 2 and negligible swelling at pH 5.8

### Example 12

This example provides the preparation of p(acrylic acid-co- ethylene glycol dimethacrylate (EGDMA)).

Acrylic acid g (0.01387 mole), 0.555 g (0.4 mmoles) β-cyclodextrin-ethylene glycol dimethacrylate complex was dissolved in 5 ml N, N dimethyl formamide. 10 mg azobisisobutyronitrile was added as the initiator and test tube is purged with nitrogen for 15 mins. Polymerization was carried out at 65°C for 18 hr. The polymer is obtained by precipitation in methanol. β-cyclodextrin is insoluble in methanol and can be recovered while poly (acrylic acid is soluble in methanol. The polymer was characterized by NMR and IR spectroscopy.

### Example 13

This example provides the preparation of p(acrylonitrile-co-ethylene) glycol dimethacrylate (EGDMA)).

Acrylonitrile 1 g , 5.03 g (3.7 mmoles) (β-cyclodextrin -ethylene glycol dimethaaylate complex was dissolved in 20 ml N, M dimethyl formamide. 16 mg azobisiobutyronitrile was added and the solution was purged with nitrogen for 15 minutes. Polymerization was carried out at 65°C for 20 h. The polymer was obtained by precipitation in water. The yield of the polymer was 70 %. The polymer was characterized by IR and ¹H NMR spectroscopy. IR (nujol): 2243 cm⁻¹ -C=N, 1728 cm¹, -C=O, 1645 cm⁻¹, =CH₂

### Example 14

This example provides the preparation of crosslinked Langmuir Blodgett film¹ Poly(methyl methacrylate-EGDMA) containing 20 mol % EGDMA prepared as described in example 8 was dissolved in dichloromethane along with -hydroxy cyclohexyl phenyl ketone as a photoinitiator and cast as thin film on a silicon wafer using the Langmuir-Blodgett technique. The polymer was then crosslinked using UV irradiation giving a crosslinked thin film,

### Example 15

This example provides the preparation of p(N-isopropyl acrylamide-co-ethylene glycol dimethacrylate)

1g N-isopropyl acrylamide (8.8 mmoles), 0.589g (0.44mmoles) β-cyclodextrin-EGDMA) complex was dissolved in 5ml N, N dimethyl formamide in a test tube. To this 10 mg azobisisobutyronitrile was added and the tube was purged with nitrogen for 15 minutes. Polymerization was carried out at 65°C for 18 hours. After cooling, the DMF solution was added to 200 ml cold water with stirring. The polymer was isolated by raising the temperature to 40°C. The yield of the polymer was 74%. The polymer was characterized by IR and ¹H NMR spectroscopy ¹H NMR (D₂O): 0.9-1.2 δ, (-CH-CH₂)-, 2.93 δ, -CH₃, 3.5 δ, m, -CH, 4.03 δ, EDA protons, 6.2 δ ―NH.

### Example 16

This example provides the preparation of p(hydroxyethyl methacrylate(HEMA)-co-ethylene glycol dimethacrylate)

2 g HEMA (0.015moles), 2.05g (1.54 mmoles) (β-cyclodextrin-ethylene glycol dimethacrylate complex was dissolved in 20 ml N, N dimethyl formamide. To this 25 mg azobisisobutyronitrile was added and the test tube was purged with nitrogen for 15 minutes. Polymerization was carried out at 65°C for 20 hours. The polymer was isolated by precipitation in cold water. The yield of the polymer was 85 %. The polymer was characterized by IR and ¹H NMR spectroscopy. ¹H NMR (CDCl₃): 2.0 δ, s, -CH₃ of HEMA and EDA, 4.02 δ d, -CH₂ of EDA 4.2 δ, b, -CH₂ of HEMA 5.4, 6.02 δ =CH₂.

### Example 17

This example provides the preparation of p(cetyl acrylate-co-ethylene glycol dimethacrylateCetyl acrylate)

0.5 g (1.6 mmoles), 0.427 g (0.32 mmoles) (β-cyclodextrin-ethylene glycol dimethacrylate complex was dissolved in 10 ml N, N dimethyl formamide. 7 mg azobisisobutynitrile was added and nitrogen was bubbled through the solution for 15 minutes. Polymerization was carried out 65°C for 24 hours. The DMF solution was poured in 50 ml methanol to precipitate (β-cyclodextrin. The polymer was soluble in methanol. It was recovered by evaporation of methanol. The yield of the polymer was 50 %. The polymer was characterized by IR and ¹H NMR spectroscopy. ¹H NMR (CDCl₃) 0.9-1.5 δ, cetyl methylene groups, 2.5-3.3 δ, cetyl chain protons, 5.26 δ, =CH₂, 4.03 δ,-CH₂ of EDA.

### Example 18

This example provides the preparation of p(styrene-co-divinyl benzene).

1 g styrene (9.6 mmoles) and 0.67 g (0.48 mmoles), β-cyclodextrin-divinyl benzene complex 1:1) was dissolved in 5 ml N, N dimethyl formamide and 10 mg azobisisobutyronitrile was added. Nitrogen was bubbled through the test tube for 15 minutes. Polymerization was carried out at, 65°C for 18 hours. The polymer was isolated adding the DMF solution to 50 ml tetrahydrofuran to remove β-cyclodextrin and the polymer was re-precipitated from tetrahydrofuran. The yield was 55%. The molecular weight of the polymer as characterized by GPC was, M_{w}=1 1,770, Mₙ = 4170 and polydispersity was 2.82. The polymer was characterized by ¹H NMR and IR spectroscopy. ¹H NMR (DMSOD₆): 7.4 δ, 7.37 δ, 7.29 δaromatic protons, 6.7 δ =CH of DVB, 5.9, 5.8 δ CH.IR (nujol) : 698cm⁻¹ 721 cm⁻¹, 844 cm⁻¹ mono and di substituted aromatic rings, 1597 cm⁻¹,1658 cm⁻¹ C=C.

**The Advantages of the present invention are:**
1. A simple and easy method of preparation of preparation of copolymers having multiple unsaturations.
2. Such polymers can be converted into different forms like thin films, monolayers, micro or nanoparticles and then can be crosslinked in a step to obtain tailor made polymers for wide range of applications.
3. Provides a simple method for the preparation for making graft, block or polymers with other morphologies.

## Claims

1. An organic solvent soluble crosslinker copolymer non-covalently interacting with cyclodextrin and made of units of vinyl monomers having multiple unsaturation, said soluble copolymer having the formula ((Ax) (By))ₙ, wherein A and B are vinyl monomers that are soluble in organic solvent and, A is a vinyl monomer comprising single unsaturation; B is a vinyl monomer comprising multiple unsaturations; and x, y and n are each an integer having values greater than zero.

2. The organic solvent soluble copolymer as claimed in claim 1, wherein the vinyl monomer comprising single unsaturation is selected from the group consisting of acrylates, methacrylates, acrylamides comprising of methyl methacrylate, ethyl acrylate, butyl acrylate, acrylic acid, methacrylic acid, acrylonitrile, vinyl acetate, glycidyl methacrylate, 2-hydroxyethyl methacrylate, 2-hydroxyl propyl methacrylate, 2-amino ethyl acrylate hydrochloride butyl acrylate cetyl acrylate, cetyl methacrylate, phenol methacrylate, N-isopropyl acrylamide, acrylamide, N-t-butyl acrylamide, styrene and styrene sulfonic acid.

3. The organic solvent soluble copolymers as claimed in claim 1, wherein the vinyl monomer with multiple unsaturations is selected from the group consisting of diacrylates, dimethacrylates, tri or tetra acrylates or methacrylates comprising ethylene glycol dimethacrylate, trimethylol propane trimethacrylate, pentaerythritol trimethacrylate, pentaerythritol tetramethacrylate, bisphenol A dimethacrylate, glycerol dimethacrylate, glycerol diacrylate, vinyl methacrylate, vinyl acrylate, trimethylol propane triacrylate, pentaerythritol tetraacrylate or aromatic divinyl compounds.

4. The soluble copolymer as claimed in claim 1, wherein the aromatic divinyl compound is divinyl benzene.

5. The polymer composition as claimed in claim 1, wherein the content of the monomer with multiple unsaturation in the copolymer may be varied from 0.01-99.9%.

6. A process for the preparation of organic solvent soluble copolymers of vinyl monomers having general formula [(Ax) (By)]ₙ, wherein A is vinyl monomer comprising one unsaturation, B is vinyl monomer containing multiple unsaturation and x, y and n are integral values greater than zero, the said process comprising the steps of:
a) dissolving an inclusion complex of a monomer containing multiple unsaturation with a cyclic macromolecular compound in a solvent; and
b) adding a vinyl monomer having single unsaturation and a free radical initiator to the reaction mixture of step (a) and polymerizing the solution thus formed to obtain the organic solvent soluble copolymer.

7. A process as claimed in claim 6, wherein the inclusion complex of the monomer containing multiple unsaturation is obtained by:
(a) dissolving β-cyclodextrin in water;
(b) adding ethylene glycol dimethacrylate to the reaction mixture of (a) and stirring the same to form a precipitate;
(c) filtering the precipitate and washing the same with water and methanol, and
(d) drying the washed precipitate to obtain the inclusion complex.

8. A process as claimed in claim 6, wherein the vinyl monomer with single unsaturation is selected from the group consisting of acrylates, methacrylates, acrylamides comprising of methyl methacrylate, ethyl acrylate, butyl acrylate, acrylic acid, methacrylic acid, acrylonitrile, vinyl acetate, glycidyl methacrylate, 2-hydroxyethyl methacrylate, 2-hydroxyl propyl methacrylate, 2-amino ethyl acrylate hydrochloride butyl acrylate cetyl acrylate, cetyl methacrylate, phenol methacrylate, N-isopropyl acrylamide, acrylamide, N-t-butyl acrylamide, styrene and styrene sulfonic acid.

9. A process as claimed in claim 6, wherein the vinyl monomer with multiple unsaturation is selected from the group consisting of diacrylates, dimethacrylates, tri or terra acrylates or methacrylates comprising ethylene glycol dimethacrylate, trimethylol propane trimethacrylate, pentaerythritol trimethacrylate, pentaerythritol tetramethacrylate, bisphenol A dimethacrylate, glycerol dimethacrylate, glycerol diacrylate, vinyl methacrylate, vinyl acrylate, trimethylol propane triacrylate, pentaerythritol tetraacrylate or aromatic divinyl compounds.

10. A process as claimed in claim 6, wherein the aromatic divinyl compound is divinyl benzene.

11. A process as claimed in claim 6 wherein in step (a), the solvent used is polar aprotic solvent.

12. A process as claimed in claim 11, wherein the polar aprotic solvent used is selected from the group comprising of N, N dimethyl fonnamide, N, N dimethyl acetamide, dimethyl sulfoxide and water.

13. A process as claimed in claim 6 wherein in step (a), the free radical initiator used is a thermal initiator or a photosensitive initiator.

14. A process as claimed in claim 13, wherein the thermal initiator is selected from the group comprising of azo initiators, peroxide type initiators and redox type initiators.

15. A process as claimed in claim 14, wherein the azo initiator used is azobisobutyronitrile.

16. A process as claimed in claim 14, wherein the peroxide initiator used is selected from benzoylperoxide and t-butyl hydroperoxide.

17. A process as claimed in claim 14, wherein the redox initiator used is potassium persulphate and ammonium persulphate.

18. A process as claimed in claim 13, wherein the photosensitive initiator is selected from the group comprising of cumene hydroperoxide, benzoin ethyl ether, 2, 2-dimethoxy-2-phenyl acetophenone, 1-hydroxycyclohexyl-1-phenyl ketone (Irgacure-184), bis (2,4,6-trimethyl benzoyl) phenyl phosphine (Irgacure-819).

19. A process of preparation of a cross-linked polymer from the soluble copolymers of claim 1, the said process comprising the steps of:
a. dissolving soluble copolymer of claim 1 in a solvent along with a free radical initiator, and
b. heating or irradiating the mixture of step (a) to obtain the cross linked polymer.

20. A process as claimed in claim 19, wherein in step (a) the free radical initiator used is a thermal initiator or a photo initiator.

21. A process as claimed in claim 19, wherein the thermal initiator is selected from the group comprising of azo initiators and peroxide type initiators.

22. A process as claimed in claim 21, wherein the azo initiator used is azobisobutyronitrile.

23. A process as claimed in claim 21, wherein the peroxide initiator used is selected from benzoylperoxide and t-butyl hydroperoxide.

24. A process as claimed in claim 19, wherein the photo initiator is selected from the group comprising of cumene hydroperpxide, benzoin ethyl ether, 2, 2-dimethoxy-2-phenyl acetophenone, 1-hydroxy cyclohexyl-1-phenyl ketone (Irgacure-184), bis (2,4,6-trimethyl benzoyl) phenyl phosphine.

25. A process as claimed in claim 19 wherein in step (b), the reaction mixture is heated up to temperature in the range of 40 to 80°C under inert atmosphere to obtain the cross-linked polymer.

## Patentansprüche

1. In einem organischen Lösungsmittel lösliches Vernetzercopolymer, das nicht-kovalent mit Cyclodextrin interagiert und hergestellt ist aus Einheiten von Vinylmonomeren mit mehrfacher Ungesättigtheit, wobei das lösliche Copolymer die Formel [(Ax) (By)]ₙ hat, worin A und B Vinylmonomere sind, die in einem organischen Lösungsmittel löslich sind, und A ein Vinylmonomer ist, das eine einzelne Ungesättigtheit umfaßt, B ein Vinylmonomer ist, das mehrfache Ungesättigtheiten umfaßt, und x, y und n jeweils eine ganze Zahl mit Werten größer als Null sind.

2. In einem organischen Lösungsmittel lösliches Copolymer gemäß Anspruch 1, worin das Vinylmonomer, das eine einzelne Ungesättigtheit umfaßt, ausgewählt ist aus der Gruppe bestehend aus Acrylaten, Methacrylaten, Acrylamiden umfassend Methylmethacrylat, Ethylacrylat, Butylacrylat, Acrylsäure, Methacrylsäure, Acrylnitril, Vinylacetat, Glycidylmethacrylat, 2-Hydroxyethylmethacrylat, 2-Hydroxylpropylmethacrylat, 2-Aminoethylacrylathydrochlorid, Butylacrylat, Cetylacrylat, Cetylmethacrylat, Phenolmethacrylat, N-Isopropylacrylamid, Acrylamid, N-t-Butylacrylamid, Styrol und Styrolsulfonsäure.

3. In einem organischen Lösungsmittel lösliche Copolymere gemäß Anspruch 1, worin das Vinylmonomer mit mehrfachen Ungesättigtheiten ausgewählt ist aus der Gruppe bestehend aus Diacrylaten, Dimethacrylaten, Tri- oder Tetraacrylaten oder -methacrylaten umfassend Ethylenglycoldimethacrylat, Trimethylolpropantrimethacrylat, Pentaerythritoltrimethacrylat, Pentaerythritoltetramethacrylat, Bisphenol-A-dimethacrylat, Glyceroldimethacrylat, Glyceroldiacrylat, Vinylmethacrylat, Vinylacrylat, Trimethylolpropantriacrylat, Pentaerythritoltetraacrylat, oder aromatischen Divinylverbindungen.

4. Lösliches Copolymer gemäß Anspruch 1, worin die aromatische Divinylverbindung Divinylbenzol ist.

5. Polymerzusammensetzung gemäß Anspruch 1, worin der Gehalt des Monomers mit mehrfachen Ungesättigtheiten in dem Copolymer von 0,01 bis 99,9 % variiert werden kann.

6. Verfahren zur Herstellung von in einem organischen Lösungsmittel löslichen Copolymeren aus Vinylmonomeren mit der allgemeinen Formel [(Ax) (By)]ₙ, worin A ein Vinylmonomer ist, das eine Ungesättigtheit umfaßt, B ein Vinylmonomer ist, das mehrfache Ungesättigtheiten umfaßt, und x, y und n ganzzahlige Werte größer als Null sind, wobei das Verfahren die Schritte umfaßt:
a) Lösen eines Einschlußkomplexes eines Monomers enthaltend mehrfache Ungesättigtheiten mit einer cyclischen makromolekularen Verbindung in einem Lösungsmittel und
b) Zugeben eines Vinylmonomers mit einer einzelnen Ungesättigtheit und eines freien Radikalstarters zu der Reaktionsmischung aus Schritt (a) und Polymerisieren der so gebildeten Lösung, um das in einem organischen Lösungsmittel lösliche Copolymer zu erhalten.

7. Verfahren gemäß Anspruch 6, worin der Einschlußkomplex des Monomers, das mehrfache Ungesättigtheiten enthält, erhalten wird durch:
(a) Lösen von β-Cyclodextrin in Wasser,
(b) Zugeben von Ethylenglycoldimethacrylat zu der Reaktionsmischung aus (a) und Rühren derselben, um ein Präzipitat zu bilden,
(c) Filtrieren des Präzipitats und Waschen desselben mit Wasser und Methanol und
(d) Trocknen des gewaschenen Präzipitats, um den Einschlußkomplex zu erhalten.

8. Verfahren gemäß Anspruch 6, worin das Vinylmonomer mit einer einzelnen Ungesättigtheit ausgewählt ist aus der Gruppe bestehend aus Acrylaten, Methacrylaten, Acrylamiden umfassend Methylmethacrylat, Ethylacrylat, Butylacrylat, Acrylsäure, Methacrylsäure, Acrylnitril, Vinylacetat, Glycidylmethacrylat, 2-Hydroxyethylmethacrylat, 2-Hydroxylpropylmethacrylat, 2-Aminoethylacrylathydrochlorid, Butylacrylat, Cetylacrylat, Cetylmethacrylat, Phenolmethacrylat, N-Isopropylacrylamid, Acrylamid, N-t-Butylacrylamid, Styrol und Styrolsulfonsäure.

9. Verfahren gemäß Anspruch 6, worin das Vinylmonomer mit mehrfacher Ungesättigtheit ausgewählt ist aus der Gruppe bestehend aus Diacrylaten, Dimethacrylaten, Tri- oder Tetraacrylaten oder -methacrylaten umfassend Ethylenglycoldimethacrylat, Trimethylolpropantrimethacrylat, Pentaerythritoltrimethacrylat, Pentaerythritoltetramethacrylat, Bisphenol-A-dimethacrylat, Glyceroldimethacrylat, Glyceroldiacrylat, Vinylmethacrylat, Vinylacrylat, Trimethylolpropantriacrylat, Pentaerythritoltetraacrylat, oder aromatischen Divinylverbindungen.

10. Verfahren gemäß Anspruch 6, worin die aromatische Divinylverbindung Divinylbenzol ist.

11. Verfahren gemäß Anspruch 6, worin das in Schritt (a) verwendete Lösungsmittel ein polares aprotisches Lösungsmittel ist.

12. Verfahren gemäß Anspruch 11, worin das verwendete polare aprotische Lösungsmittel ausgewählt ist aus der Gruppe umfassend N,N-Dimethylformamid, N,N-Dimethylacetamid, Dimethylsulfoxid und Wasser.

13. Verfahren gemäß Anspruch 6, worin der in Schritt (a) verwendete freie Radikalstarter ein thermischer Starter oder ein lichtempfindlicher Starter ist.

14. Verfahren gemäß Anspruch 13, worin der thermische Starter ausgewählt ist aus der Gruppe umfassend Azostarter, Starter vom Peroxidtyp und Starter vom Redoxtyp.

15. Verfahren gemäß Anspruch 14, worin der verwendete Azostarter Azobisisobutyronitril ist.

16. Verfahren gemäß Anspruch 14, worin der verwendete Peroxidstarter ausgewählt ist aus Benzoylperoxid und t-Butylhydroperoxid.

17. Verfahren gemäß Anspruch 14, worin der verwendete Redoxstarter Kaliumpersulfat und Ammoniumpersulfat ist.

18. Verfahren gemäß Anspruch 13, worin der lichtempfindliche Starter ausgewählt ist aus der Gruppe umfassend Cumolhydroperoxid, Benzoinethylether, 2,2-Dimethoxy-2-phenylacetophenon, 1-Hydroxycyclohexyl-1-phenylketon (Irgacure-184), Bis-(2,4,6-trimethylbenzoyl)phenylphosphin (Irgacure-819).

19. Verfahren zur Herstellung eines vernetzten Polymers aus den löslichen Copolymeren gemäß Anspruch 1, wobei das Verfahren die Schritte umfaßt:
a. Lösen des löslichen Copolymers gemäß Anspruch 1 zusammen mit einem freien Radikalstarter in einem Lösungsmittel und
b. Erwärmen oder Bestrahlen der Mischung aus Schritt (a), um das vernetzte Polymer zu erhalten.

20. Verfahren gemäß Anspruch 19, worin der in Schritt (a) verwendete freie Radikalstarter ein thermischer Starter oder ein Fotostarter ist.

21. Verfahren gemäß Anspruch 19, worin der thermische Starter ausgewählt ist aus der Gruppe umfassend Azostarter und Starter vom Peroxidtyp.

22. Verfahren gemäß Anspruch 21, worin der verwendete Azostarter Azobisisobutyronitril ist.

23. Verfahren gemäß Anspruch 21, worin der verwendete Peroxidstarter ausgewählt ist aus Benzoylperoxid und t-Butylhydroperoxid.

24. Verfahren gemäß Anspruch 19, worin der Fotostarter ausgewählt ist aus der Gruppe umfassend Cumolhydroperoxid, Benzoinethylether, 2,2-Dimethoxy-2-phenylacetophenon, 1-Hydroxycyclohexyl-1-phenylketon (Irgacure-184), Bis-(2,4,6-trimethylbenzoyl)phenylphosphin.

25. Verfahren gemäß Anspruch 19, worin die Reaktionsmischung in Schritt (b) unter Inertatmosphäre auf eine Temperatur im Bereich von 40 bis 80°C erwärmt wird, um das vernetzte Polymer zu erhalten.

## Revendications

1. Copolymère de réticulation, soluble dans les solvants organiques, interagissant de manière non covalente avec la cyclodextrine et formé de motifs de monomères vinyliques à insaturations multiples, ledit copolymère soluble répondant à la formule [(Ax)(By)]ₙ, dans laquelle A et B représentent des monomères vinyliques qui sont solubles dans un solvant organique et A représente un monomère vinylique à insaturation unique, B représente un monomère vinylique à insaturations multiples et x, y et n représentent chacun un nombre entier ayant une valeur supérieure à zéro.

2. Copolymère, soluble dans des solvants organiques, suivant la revendication 1, dans lequel le monomère vinylique à insaturation unique est choisi dans le groupe consistant en des acrylates, des méthacrylates, des acrylamides comprenant le méthacrylate de méthyle, l'acrylate d'éthyle, l'acrylate de butyle, l'acide acrylique, l'acide méthacrylique, l'acrylonitrile, l'acétate de vinyle, le méthacrylate de glycidyle, le méthacrylate de 2-hydroxyéthyle, le méthacrylate de 2-hydroxypropyle, le chlorhydrate d'acrylate de 2-aminoéthyle, l'acrylate de butyle, l'acrylate de cétyle, le méthacrylate de cétyle, le méthacrylate de phényle, le N-isopropyl-acrylamide, l'acrylamide, le N-tertiobutyl-acrylamide, le styrène et l'acide styrènesulfonique.

3. Copolymères, solubles dans des solvants organiques, suivant la revendication 1, dans lesquels le monomère vinylique à insaturations multiples est choisi dans le groupe consistant en des diacrylates, des diméthacrylates, des tri- ou tétra-acrylates ou -méthacrylates comprenant le diméthacrylate d'éthylèneglycol, le triméthacrylate de triméthylolpropane, le triméthacrylate de pentaérythritol, le tétraméthacrylate de pentaérythritol, le diméthacrylate de bisphénol A, le diméthacrylate de glycérol, le diacrylate de glycérol, le méthacrylate de vinyle, l'acrylate de vinyle, le triacrylate de triméthylolpropane, le tétra-acrylate de pentaérythritol ou des composés divinyliques aromatiques.

4. Copolymère soluble suivant la revendication 1, dans lequel le composé divinylique aromatique est le divinylbenzène.

5. Composition polymère suivant la revendication 1, dans laquelle il est possible de faire varier la teneur en monomère à insaturations multiples dans le copolymère de 0,01 % à 99,9 %.

6. Procédé pour la préparation de copolymères, solubles dans les solvants organiques, de monomères vinyliques répondant à la formule générale [(Ax)(By)]n, dans lequel A représente un monomère vinylique comprenant une insaturation, B représente un monomère vinylique à insaturations multiples et x, y et n représentent des nombres entiers d'une valeur supérieure à 0, ledit procédé comprenant les étapes consistant à :
a) dissoudre un complexe d'inclusion d'un monomère à insaturations multiples avec un composé macromoléculaire cyclique dans un solvant ; et
b) ajouter un monomère vinylique à insaturation unique et un initiateur radicalaire au mélange réactionnel de l'étape a) et polymériser la solution ainsi formée pour obtenir le copolymère soluble dans les solvants organiques.

7. Procédé suivant la revendication 6, dans lequel le complexe d'inclusion de monomère à insaturations multiples est obtenu :
(a) en dissolvant de la β-cyclodextrine dans de l'eau ;
(b) en ajoutant du diméthacrylate d'éthylèneglycol au mélange réactionnel de (a) et en agitant le mélange obtenu pour former un précipité ;
(c) en filtrant le précipité et en le lavant avec de l'eau et du méthanol ; et
(d) en séchant le précipité lavé pour obtenir le complexe d'inclusion.

8. Procédé suivant la revendication 6, dans lequel le monomère vinylique à insaturation unique est choisi dans le groupe consistant en des acrylates, des méthacrylates, des acrylamides comprenant le méthacrylate de méthyle, l'acrylate d'éthyle, l'acrylate de butyle, l'acide acrylique, l'acide méthacrylique, l'acrylonitrile, l'acétate de vinyle, le méthacrylate de glycidyle, le méthacrylate de 2-hydroxyéthyle, le méthacrylate de 2-hydroxypropyle, le chlorhydrate d'acrylate de 2-aminoéthyle, l'acrylate de butyle, l'acrylate de cétyle, le méthacrylate de cétyle, le méthacrylate de phényle, le N-isopropyl-acrylamide, l'acrylamide, le N-tertiobutyl-acrylamide, le styrène et l'acide styrènesulfonique.

9. Procédé suivant la revendication 6, dans lequel le monomère vinylique à insaturations multiples est choisi dans le groupe consistant en des diacrylates, des diméthacrylates, des tri- ou tétra-acrylates ou -méthacrylates comprenant le diméthacrylate d'éthylèneglycol, le triméthacrylate de triméthylolpropane, le triméthacrylate de pentaérythritol, le tétraméthacrylate de pentaérythritol, le diméthacrylate de bisphénol A, le diméthacrylate de glycérol, le diacrylate de glycérol, le méthacrylate de vinyle, l'acrylate de vinyle, le triacrylate de triméthylolpropane, le tétra-acrylate de pentaérythritol ou des composés divinyliques aromatiques.

10. Procédé suivant la revendication 6, dans lequel le composé divinylique aromatique est le divinylbenzène.

11. Procédé suivant la revendication 6, dans lequel, dans l'étape (a), le solvant utilisé est un solvant aprotique polaire.

12. Procédé suivant la revendication 11, dans lequel le solvant aprotique polaire utilisé est choisi dans le groupe comprenant le N,N-diméthylformamide, le N,N-diméthyl-acétamide, le diméthylsulfoxyde et l'eau.

13. Procédé suivant la revendication 6, dans lequel, dans l'étape (a), l'initiateur radicalaire utilisé est un initiateur thermique ou un initiateur photosensible.

14. Procédé suivant la revendication 13, dans lequel l'initiateur thermique est choisi dans le groupe comprenant des initiateurs azoïques, des initiateurs du type peroxyde et des initiateurs du type redox.

15. Procédé suivant la revendication 14, dans lequel l'initiateur azoïque utilisé est l'asobisisobutyronitrile.

16. Procédé suivant la revendication 14, dans lequel l'initiateur du type peroxyde utilisé est choisi entre le peroxyde de benzoyle et l'hydroperoxyde de tertiobutyle.

17. Procédé suivant la revendication 14, dans lequel l'initiateur redox utilisé est le persulfate de potassium ou le persulfate d'ammonium.

18. Procédé suivant la revendication 13, dans lequel l'initiateur photosensible est choisi dans le groupe comprenant l'hydroperoxyde de cumène, l'éther éthylique de benzoïne, la 2,2-diméthoxy-2-phényl-acétophénone, la 1-hydroxy-cyclohexyl-1-phénylcétone (Irgacure-184) et la bis(2,4,6-triméthyl-benzoyl)phénylphosphine (Irgacure-819).

19. Procédé pour la préparation d'un polymère réticulé à partir des copolymères solubles de la revendication 1, ledit procédé comprenant les étapes consistant à :
a. dissoudre le copolymère soluble de la revendication 1 dans un solvant avec un initiateur radicalaire, et
b. chauffer ou irradier le mélange de l'étape (a) pour obtenir le polymère réticulé.

20. Procédé suivant la revendication 19, dans lequel, dans l'étape (a), l'initiateur radicalaire utilisé est un initiateur thermique ou un photo-initiateur.

21. Procédé suivant la revendication 19, dans lequel l'initiateur thermique est choisi dans le groupe comprenant des initiateurs azoïques et des initiateurs du type peroxyde.

22. Procédé suivant la revendication 21, dans lequel l'initiateur azoïque utilisé est l'azobisisobutyronitrile.

23. Procédé suivant la revendication 21, dans lequel l'initiateur du type peroxyde utilisé est choisi entre le peroxyde de benzoyle et l'hydroperoxyde de tertiobutyle.

24. Procédé suivant la revendication 19, dans lequel le photo-initiateur est choisi dans le groupe comprenant l'hydroperoxyde de cumène, l'éther éthylique de benzoïne, la 2,2-diméthoxy-2-phényl-acétophénone, la 1-hydroxy-cyclohexyl-1-phénylcétone (Irgacure-184) et la bis(2,4,6-triméthyl-benzoyl)phénylphosphine.

25. Procédé suivant la revendication 19, dans lequel, dans l'étape (b), le mélange réactionnel est chauffé à une température comprise dans l'intervalle de 40 à 80°C sous atmosphère inerte pour obtenir le polymère réticulé.
